# EUROPEAN PATENT SPECIFICATION

(11) **EP 3 268 890 B1**
(45) Date of publication and mention of the grant of the patent: **29.05.2019**
(21) Application number: 15721145.9
(22) Date of filing: 22.04.2015
(51) Int. Cl.: H04W 12/06, G06F 21/35, G06F 21/43, H04L 29/06

(54) **A METHOD FOR AUTHENTICATING A USER WHEN LOGGING IN AT AN ONLINE SERVICE**
VERFAHREN ZUM AUTHENTIFIZIEREN EINES BENUTZERS BEIM ANMELDEN BEI EINEM ONLINE-DIENST
PROCÉDÉ D'AUTHENTIFICATION D'UN UTILISATEUR LORS DE SA CONNEXION À UN SERVICE EN LIGNE

(43) Date of publication of application: 17.01.2018
(73) Proprietor: Siemens Aktiengesellschaft, 80333 München (DE)
(72) Inventor: FUSENIG, Volker, 80993 München (DE)
(86) International application number: PCT/EP2015/058731
(87) International publication number: WO 2016/169593

(56) References cited:
- WO-A1-2014/146446
- US-A1- 2008 098 225
- US-A1- 2010 218 241
- SCHUBA M ET AL: "Internet ID - Flexible Re-use of Mobile Phone Authentication Security for Service Access", INTERNET CITATION, November 2004 (2004-11), XP002427242, Retrieved from the Internet: URL:http://www.ercsson.com/technoloy/resea rch_papers/service_layer/papers/internet_i d.shtml [retrieved on 2007-03-29]

## Description

The invention refers to a method for authenticating a user when logging in at an online service.

For using online services, such as mail accounts, online shops, cloud services and the like, users usually have to log in at those services based on an authentication. In many cases, a simple authentication by specifying a user name and a password is used.

In order to enhance the security of a user authentication, the so-called multi factor authentication is known from the prior art. This authentication is based on more than one factor for verifying the authenticity of a user.

For a two factor authentication, smartcards, USB sticks or mobile phones may be used. In one variant of this authentication, the authentication is coupled to the additional factor that a smartcard or USB stick is inserted in the device at which the user would like to authenticate. In another variant, an authentication code, such as a PIN, is sent to a mobile phone of the user, e.g. via an SMS message. The user needs to input this code on the device at which he would like to authenticate. The above described variants of the two factor authentication have disadvantage. Either additional equipment has to be carried by the user or an authentication code has to be input manually by the user.

An app for mobile phones is known from the prior art which is an extension of the two factor authentication. When a user has already authenticated via a device, a request is sent to the app on his mobile device. Only in case that the user confirms the request in the app, a login via the device will be performed.

Moreover, the FIDO alliance has published standards where a user can establish an access to different online services via a single app on one device (e.g. a smart phone). If the user has several devices, the app needs to be installed on each device and a binding for the access to the online services has to be established in each device manually.

Document US 2014/0123224 A1 discloses a wireless security device which can be coupled directly with the device at which a user would like to authenticate. This wireless security device can be used for a multi factor authentication.

Document US 2008/098225 A1 discloses a method for authenticating a user according to the preamble of claim 1.

Document WO 2014/146446 A1 describes a method of identity authentication via a login interface on a user interface of an application client. Identity information and an identifier of the application client is obtained and coded by the client. This code is displayed on the user interface of the client. A mobile terminal obtains this code and decodes this code in order to send inter alia account information of the mobile terminal to an authentication server for authentication.

Document M. Schuba et al.: "Internet ID - Flexible Re-use of Mobile Phone Authentication Security for Service Access", INTERNET CITATION, November 2004, describes a method for user authentication in identity management systems by the use of a SIM smartcard in a mobile phone.

In document US 2010/0218241 A1, an authentication scheme is disclosed where an initial portion of a password generated by a password server is received at a mobile communication device and where the remaining portion of the password is received at a password client. The initial portion is communicated from the mobile communication device to a network resource server, where it is passed to the password client, which combines it with the remaining portion to produce a complete password. A value calculated from this complete password is sent to the password server which performs an authentication based on this value.

It is an object of the invention to enable an easy and secure authentication of a user when logging in at an online service.

This object is solved by the independent patent claims. Preferred embodiments of the invention are defined in the dependent claims.

The method of the invention is used for authenticating a user when logging in at an online service, where the online service is provided by a server arrangement (i.e. one or more servers). An online service may e.g. be a mail account, an online shop, a cloud service, a mobile payment service and the like. The method of the invention is based on a communication between the online service and a primary device and between the online service and a secondary device. In other words, the primary device and the secondary device are communication devices.

In a step a) of the method, a user identification specified by the user at the secondary device and not including any credential is received by the online service. The term credential is known for a skilled person and refers to a machine readable information concerning the authenticity of the user.

In a step b), an authentication request is transmitted by the online service to the primary device where the primary device is associated with the user identification. In other words, the online service has the information which primary device is associated with the user identification specified in step a). Hence, the online service can address this primary device in an authentication request.

In a step c), an authentication response comprising at least one credential is transmitted by the primary device to the online service. In one variant of step c), the at least one credential originates from a storage in the primary device, i.e. the at least one credential is pre-stored in a storage of the primary device. The at least one credential originating from this storage is only transmitted through the authentication response upon a successful local authentication of the user at the primary device. In other words, the storage can be regarded as a secure storage only giving access to the at least one credential stored therein in case of a successful local authentication of the user at the primary device. Hence, the authentication response including the at least one credential will only be transmitted when a local authentication of the user succeeds. Otherwise, no authentication response or an authentication response not including the at least one credential will be sent by the primary device.

In another variant of step c), the at least one credential is not pre-stored in a storage of the primary device. Instead, the at least one credential is specified by the user at the primary device, e.g. via an input at a user interface of the primary device or by presenting biometric features at the primary device.

In a step d), the user is logged in at the online service and a confirmation of the login is sent to the secondary device in case of a successful verification of the at least one credential by the online service. If the verification is not successful, the method will be terminated without a login. This termination is preferably notified to the user via the primary and/or secondary device. Such a notification is preferably also implemented for the method terminations described later on.

According to the invention, a verification code (e.g. a randomly generated valve) is transmitted to the primary device and stored therein. Preferably, the authentication request transmitted in step b) by the online service includes this verification code. The verification code is also stored in the secondary device. In one embodiment, the verification code is generated and stored in the secondary device, where this verification code is sent via the online service to the primary device which also stores the verification code. Alternatively, the verification code is generated by the online service which transmits this verification code to both the primary device and the secondary device which store this verification code.

There are several alternatives in order to verify the authentication code.

In a first alternative, the verification code stored in the primary device is output at a user interface of the primary device and a user interface of the secondary device enables a user to input the verification code output at the user interface of the primary device for a check by the secondary device whether the verification code input at the user interface of the secondary device coincides with the verification code stored in the secondary device.

In a second alternative, the verification code stored in the secondary device is output at a user interface of the secondary device and a user interface of the primary device enables a user to input the verification code output at the user interface of the secondary device for a check by the primary device whether the verification code input at the user interface of the primary device coincides with the verification code stored in the primary device.

According to the invention, the check of authenticity may also be done automatically by the first or secondary device. In both cases, the method can be terminated either manually by the user or automatically by the first or secondary device if the verification codes do not coincide. The verification code may e.g. refer to data randomly generated in the secondary device. However, the verification code may also be an identification of the secondary device.

The method of the invention has the advantage that a single primary device is used as an authenticator device for retrieving the at least one credential needed for the authentication at an online service. Hence, the authentication method may be used with secondary devices which are not trustful because credentials are not specified at the secondary devices due to the use of a primary authenticator device.

In a preferred embodiment, the at least one credential comprises a password and/or a PIN (PIN = Personal identification Number) and/or biometric data, particularly a fingerprint and/or an iris scan.

In another variant of the invention, the local authentication verifies at least one second credential specified by the user at the primary device. Preferably, the at least one second credential also comprises a password and/or a PIN and/or biometric data such as a fingerprint and/or an iris scan.

In another variant of the method according to the invention, the information that the primary device is to be used for authenticating the user is transmitted by the secondary device to the online service in the above step a). Hence, an authentication via the primary device as described above is only performed when a corresponding information is received by the online service. In one embodiment, the transmittal of this information is initiated by the user. If the information is not transmitted in step a), a conventional authentication where the user specifies the at least one credential at the secondary device will be performed.

In another embodiment of the invention, the authentication request transmitted in step b) by the online service includes an identification of the secondary device where the method of the invention is terminated if the secondary device with this identification is not registered for a user login at the online service. E.g., a list of registered secondary devices may be stored in the primary device which compares the received identification with the entries in the list. This variant of the invention ensures that a login can only take place via specific secondary devices.

In a preferred embodiment of the invention, the authentication response transmitted in step c) by the primary device further includes an identification of the primary device where the method is terminated if the identification of the primary device does not refer to the primary device associated with the user identification as mentioned in above step b). This embodiment enhances the security of the authentication process.

In another variant of the invention, the online service communicates with the secondary device via the Internet. However, the communication may also take place via other communication networks. Preferably, the online service communicates with the primary device via the Internet and/or a mobile communication network. In case of a mobile communication network, the authentication request and/or the authentication response is preferably a SMS message.

The primary device used in the method of the invention is preferably a mobile device which can be easily carried by a user. Particularly, the mobile device is a mobile phone and preferably a smartphone.

Besides the above method, the invention refers to a system for authenticating a user when logging in at an online service, comprising a server arrangement providing the online service as well as a primary device and a secondary device, where the online service and the primary device are adapted to communicate with each other and where the online service and the secondary device are adapted to communicate with each other. The system is adapted to perform a method according to claim 1.

The system of the invention is preferably adapted to perform one or more preferred embodiments of the method according to the invention.

The invention also refers to a server arrangement which is configured to be used as a server arrangement in the above system of the invention. In other words, the server arrangement is configured to be used as a server arrangement in the method of the invention or one or more preferred embodiments of the method of the invention.

The invention also refers to a communication device which is configured to be used as a primary device in the system of the invention. In other words, the communication device is configured to be used as a primary device in the method of the invention or one or more preferred embodiments of the method of the invention.

Moreover, the invention refers to a communication device which is configured to be used as a secondary device in the system of the invention. In other words, the communication device is configured to be used as a secondary device in the method of the invention or one or more preferred embodiment of the method of the invention.

In the following, embodiments of the invention will be described in detail with respect to the accompanying drawings wherein:
- Fig. 1: is a schematic illustration of a system incorporating an embodiment of the invention; and
- Fig. 2: is a flow chart illustrating the exchange of messages between the components shown in Fig. 1 according to an embodiment of the invention.

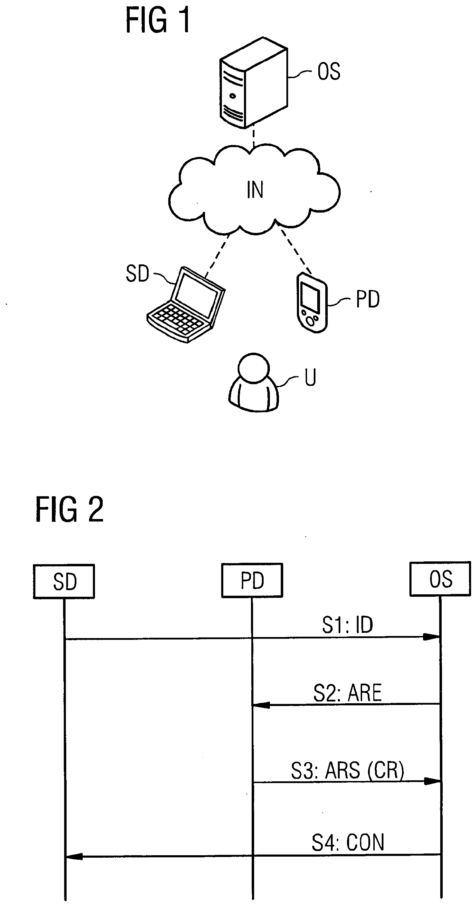

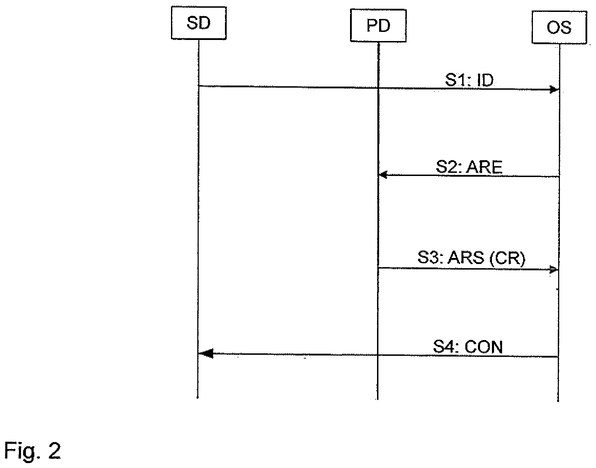

In the system of Fig. 1, a user U has access to a primary device PD in the form of his mobile phone (smart phone) as well as to a secondary device SD in the form of a laptop. The user wishes to log in at an online service OS which is implemented in a corresponding server. The primary device PD and the secondary device SD can communicate with the online service OS via the Internet IN. The online service OS may e.g. refer to a mail account, an online shop, a cloud service, a mobile payment service and the like.

In the scenario of Fig. 1, the primary device PD and the secondary device SD communicate directly with the online service OS. However, it is also possible that the communication with the online service OS takes place via an additional online service where the user intends to interact with this additional online service and where only the authentication via the online service OS is used in order to get access to the additional online service. In other words, when the user successfully logs in at the online service OS, this will also result in a login at the additional online service. The additional online service may e.g. be a web shop using the online service OS for login where the online service OS may e.g. be a social network account such as Facebook.

In order to log in at the online service OS, a user identification (particularly a user name, such as an email address) and a credential (e.g. a password) have to be transmitted to the online service for authentication. It is the basic idea of the invention that the user who wishes to log in at the online service always uses his primary device PD in order to authenticate at the online service, irrespective from which (secondary) device the login is initiated. In the scenario of Fig. 1, the user wishes to use the secondary device SD in order to login via an online portal of the online service OS. The online portal is presented to the user on the display of the laptop SD. However, only the user name but not the password for the online service shall be input via the laptop.

In a first embodiment of the invention, the credential (e.g. a PIN, a password or a fingerprint) for authenticating at the online service OS is pre-stored in a secure storage on the mobile phone PD where the secure storage can only be accessed after a successful local authentication of the user at the mobile phone PD. A specific app for the phone PD may used in order to manage the credentials for one or more online services. For the local authentication at the phone PD, an additional credential is used. This credential may also be a PIN, a password, a fingerprint and the like.

Fig. 2 shows the message flow in order to implement the first embodiment of the invention in the system of Fig. 1. Initially, the user U inputs his user identification ID for the online service OS at the secondary device SD. It is important to note that this user identification does not include any credentials. In step S1, the user identification ID input by the user is transmitted via the Internet to the online service OS. Together with the user identification ID or in a separate transmission step, the online service OS is informed about the fact that the user wishes to use an authentication via the primary device PD. Alternatively, it has been stored beforehand in the online service OS that the specific user always wishes to use an authentication via the primary device PD.

After having received the user identification ID, the online service OS sends in step S2 an authentication request ARE to the primary device PD instead of waiting for the input of a password or another credential at the secondary device. There is an association between the address of the primary device PD and the user identification ID which is known in the online service. Hence, the online service OS knows which primary device shall be addressed. The receipt of the authentication request ARE will be indicated on the display of the primary device PD. Then the user initiates a transmission of an authentication response ARS from the primary device PD to the online service OS (step S3). The authentication response ARS comprises the credential CR for the online service.

The transmission in step S3 will only be performed in case of a successful local authentication of the user at the phone PD. E.g., the app in the phone handling the authentication for the online service will request the user to input a credential (being different from credential CR) for local authentication. Particularly, the user may be requested to input a password or a PIN or to identify himself via a fingerprint or other biometric data. Upon a successful local authentication, the access to the secure storage in the phone having stored the credential CR is allowed such that the phone can transmit the authentication response ARS. If the transmission in step S3 is not possible because of an unsuccessful local authentication, the method will be terminated without a login.

Upon receipt of the authentication response ARS by the online service OS, a corresponding confirmation CON is transmitted in step S4 to the secondary device SD. This confirmation informs the user that the login at the online service OS was successful so that the user can now use this online service via the secondary device SD.

In the embodiment described herein, the authentication request ARE and the authentication response ARS are sent via the Internet, analogously to the user identification ID. However, in a modified embodiment, the authentication request as well as the authentication response may also be sent via a mobile communication network, e.g. included in corresponding SMS messages received and transmitted by the mobile phone PD. In another modification of the above embodiment, an identification of the secondary device SD may be transmitted together with the authentication request ARE in step S2. When receiving the authentication request, the primary device will also check if the secondary device according to the received identification is registered, i.e. included in a corresponding list of allowed secondary devices. If the secondary device is not registered, the method will be terminated so that no authentication at the online service will take place.

In another modification of the above embodiment, a verification code is transmitted together with an authentication request ARE. The verification code originates from the secondary device. Preferably, the verification code was randomly generated in the secondary device. E.g., the verification code is a TAN (TAN = transaction number). The original verification code is kept in the secondary device. In other words, a copy of the original verification code is transmitted together with the authentication request ARE. This copy has been sent beforehand from the secondary device to the online service which adds this code to the authentication request ARE.

The verification code can be output at the display of the primary device may also be input by the user at the secondary device. The authentication code which has been input is compared with the original authentication code in the secondary device. If those codes do not coincide, an automatic termination of the method is initiated by the secondary device.

The invention may also be implemented based on a second embodiment. The only difference between the first embodiment and the second embodiment results in the fact that the credential CR included in the authentication response ARS transmitted in step S3 is not taken from a secure storage in the primary device PD. Instead, the credential CR which is known to the user is input by him directly at a user interface of the primary device PD. This embodiment has the advantage that the transmission of the authentication response need not be coupled to a local authentication at the primary device.

The above described embodiments of the invention have several advantages. Particularly, a user friendly authentication via a single primary device can be implemented by using standard hardware like smart phones. Furthermore, a user can login at an online service even via potentially insecure secondary devices due to an authentication via a single primary device associated with the user.

The above described first embodiment enables a credential management for a plurality of online services by storing the credentials for each service in a secure storage in the primary device. Hence, a user needs only to memorize a single credential for a local authorization at the primary device. Thus, weak credentials, e.g. trivial passwords, for authentication by the online services can be avoided.

## Claims

1. A method for authenticating a user (U) when logging in at an online service (OS), where the online service (OS) is provided by a server arrangement and the method is based on a communication between the online service (OS) and a primary device (PD) and between the online service (OS) and a secondary device (SD), the method comprising the following steps:
a) a user identification (ID) specified by the user (U) at the secondary device (SD) and not including any credential is received by the online service (OS);
b) an authentication request (ARE) is transmitted by the online service (OS) to the primary device (PD) where the primary device (PD) is associated with the user identification (ID) ;
c) an authentication response (ARS) comprising at least one credential (CR) is transmitted by the primary device (PD) to the online service (OS), where the at least one credential (CR) originates from a storage in the primary device (PD) and is only transmitted through the authentication response (ARS) upon a successful local authentication of the user (U) at the primary device (PD) or where the at least one credential (CR) is specified by the user (U) at the primary device (PD);
d) in case of a successful verification of the at least one credential (CR) by the online service (OS), the user (U) is logged in at the online service (OS) and a confirmation (CON) of the login is sent to the secondary device (SD),
**characterized in that**
a verification code is transmitted to the primary device (PD) and stored therein, where the verification code is also stored in the secondary device (SD), wherein
- the verification code stored in the primary device (PD) is output at a user interface of the primary device (PD) and a user interface of the secondary device (SD) enables a user to input the verification code output at the user interface of the primary device (PD) for a check by the secondary device (SD) whether the verification code input at the user interface of the secondary device (SD) coincides with the verification code stored in the secondary device (SD);
or
- the verification code stored in the secondary device (SD) is output at a user interface of the secondary device (PD) and a user interface of the primary device (PD) enables a user to input the verification code output at the user interface of the secondary device (SD) for a check by the primary device (PD) whether the verification code input at the user interface of the primary device (PD) coincides with the verification code stored in the primary device (PD).

2. The method of claim 1, wherein the at least one credential (CR) comprises a password and/or a PIN and/or biometric data, particularly a fingerprint and/or an iris scan.

3. The method according to claim 1 or 2, wherein the local authentication verifies at least one second credential specified by the user (U) at the primary device (PD), where the at least one second credential preferably comprises a password and/or a PIN and/or biometric data, particularly a fingerprint and/or an iris scan.

4. The method according to one of the preceding claims, wherein in step a) the information that the primary device (PD) is to be used for authenticating the user is transmitted by the secondary device (SD) to the online service (OS).

5. The method according to one of the preceding claims, wherein the authentication request (ARE) transmitted in step b) by the online service (OS) includes an identification of the secondary device (SD) where the method is terminated if the secondary device (SD) with this identification is not registered for a user login at the online service (OS).

6. The method according to one of the preceding claims, wherein the authentication response (ARS) transmitted in step c) by the primary device (PD) further includes an identification of the primary device where the method is terminated if the identification of the primary device (PD) does not refer to the primary device (PD) associated with the user identification (ID) .

7. The method according to one of the preceding claims, wherein the online service (OS) communicates with the secondary device (SD) via the Internet (IN).

8. The method according to one of the preceding claims, wherein the online service (OS) communicates with the primary device (PD) via the Internet (IN) and/or a mobile communication network, where the authentication request (ARE) and/or the authentication response (ARS) is preferably a SMS message.

9. The method according to one of the preceding claims wherein the primary device (PD) is a mobile device, particularly a mobile phone and preferably a smart phone.

10. A system for authenticating a user (U) when logging in at an online service (OS), comprising a server arrangement providing the online service (OS) as well as a primary device (PD) and a secondary device (SD), where the online service (OS) and the primary device (PD) are adapted to communicate with each other and where the online service (OS) and the secondary device (SD) are adapted to communicate with each other, where the system is adapted to perform a method comprising the following steps:
a) a user identification (ID) specified by the user (U) at the secondary device (SD) and not including any credential is received by the online service (OS);
b) an authentication request (ARE) is transmitted by the online service (OS) to the primary device (PD) where the primary device (PD) is associated with the user identification (ID) ;
c) an authentication response (ARS) comprising at least one credential (CR) is transmitted by the primary device (PD) to the online service (OS), where the at least one credential (CR) originates from a storage in the primary device (PD) and is only transmitted through the authentication response (ARS) upon a successful local authentication of the user (U) at the primary device (PD) or where the at least one credential (CR) is specified by the user (U) at the primary device (PD);
d) in case of a successful verification of the at least one credential (CR) by the online service (OS), the user (U) is logged in at the online service (OS) and a confirmation (CON) of the login is sent to the secondary device (SD),
**characterized in that**
a verification code is transmitted to the primary device (PD) and stored therein, where the verification code is also stored in the secondary device (SD), wherein
- the verification code stored in the primary device (PD) is output at a user interface of the primary device (PD) and a user interface of the secondary device (SD) enables a user to input the verification code output at the user interface of the primary device (PD) for a check by the secondary device (SD) whether the verification code input at the user interface of the secondary device (SD) coincides with the verification code stored in the secondary device (SD);
or
- the verification code stored in the secondary device (SD) is output at a user interface of the secondary device (PD) and a user interface of the primary device (PD) enables a user to input the verification code output at the user interface of the secondary device (SD) for a check by the primary device (PD) whether the verification code input at the user interface of the primary device (PD) coincides with the verification code stored in the primary device (PD).

11. The system according to claim 10, wherein the system is adapted to perform a method according to anyone of claims 2 to 9.

## Patentansprüche

1. Verfahren zum Authentifizieren eines Benutzers (U) beim Anmelden für einen Online-Dienst (OS), wobei der Online-Dienst (OS) von einer Server-Anordnung bereitgestellt wird und das Verfahren auf einer Kommunikation zwischen dem Online-Dienst (OS) und einer Primärvorrichtung (PD) und zwischen dem Online-Dienst (OS) und einer Sekundärvorrichtung (SD) basiert, wobei das Verfahren die folgenden Schritte umfasst:
a) eine Benutzerkennung (ID), die vom Benutzer (U) an der Sekundärvorrichtung (SD) angegeben wird und keine Anmeldeinformationen enthält, wird von dem Online-Dienst (OS) empfangen,
b) eine Authentifizierungsaufforderung (ARE) wird von dem Online-Dienst (OS) zu der Primärvorrichtung (PD) übertragen, wobei die Primärvorrichtung (PD) mit der Benutzerkennung (ID) verknüpft ist,
c) eine Authentifizierungsantwort (ARS) mit mindestens einer Anmeldeinformation (CR) wird von der Primärvorrichtung (PD) zu dem Online-Dienst (OS) übertragen, wobei die mindestens eine Anmeldeinformation (CR) aus einem Speicher in der Primärvorrichtung (PD) stammt und nur nach erfolgreicher lokaler Authentifizierung des Benutzers (U) an der Primärvorrichtung (PD) über die Authentifizierungsantwort (ARS) übertragen wird oder wobei die mindestens eine Anmeldeinformation (CR) vom Benutzer (U) an der Primärvorrichtung (PD) angegeben wird,
d) bei einer erfolgreichen Verifizierung der mindestens einen Anmeldeinformation (CR) durch den Online-Dienst (OS) wird der Benutzer (U) für den Online-Dienst (OS) angemeldet und eine Bestätigung (CON) der Anmeldung zu der Sekundärvorrichtung (SD) gesendet,
**dadurch gekennzeichnet, dass**
ein Verifizierungscode zu der Primärvorrichtung (PD) übertragen und dort gespeichert wird, wobei der Verifizierungscode auch in der Sekundärvorrichtung (SD) gespeichert wird, wobei
- der in der Primärvorrichtung (PD) gespeicherte Verifizierungscode an einer Benutzerschnittstelle der Primärvorrichtung (PD) ausgegeben wird und eine Benutzerschnittstelle der Sekundärvorrichtung (SD) einen Benutzer in die Lage versetzt, den an der Benutzerschnittstelle der Primärvorrichtung (PD) ausgegebenen Verifizierungscode einzugeben, damit von der Sekundärvorrichtung (SD) überprüft werden kann, ob der an der Benutzerschnittstelle der Sekundärvorrichtung (SD) eingegebene Verifizierungscode mit dem in der Sekundärvorrichtung (SD) gespeicherten Verifizierungscode übereinstimmt,
oder
- der in der Sekundärvorrichtung (SD) gespeicherte Verifizierungscode an einer Benutzerschnittstelle der Sekundärvorrichtung (PD) ausgegeben wird und eine Benutzerschnittstelle der Primärvorrichtung (PD) einen Benutzer in die Lage versetzt, den an der Benutzerschnittstelle der Sekundärvorrichtung (SD) ausgegebenen Verifizierungscode einzugeben, damit von der Primärvorrichtung (PD) überprüft werden kann, ob der an der Benutzerschnittstelle der Primärvorrichtung (PD) eingegebene Verifizierungscode mit dem in der Primärvorrichtung (PD) gespeicherten Verifizierungscode übereinstimmt.

2. Verfahren nach Anspruch 1, wobei die mindestens eine Anmeldeinformation (CR) ein Passwort und/oder eine PIN und/oder biometrische Daten, insbesondere einen Fingerabdruck und/oder einen Iris-Scan, umfasst.

3. Verfahren nach Anspruch 1 oder 2, wobei die lokale Authentifizierung mindestens eine vom Benutzer (U) an der Primärvorrichtung (PD) angegebene zweite Anmeldeinformation verifiziert, wobei die mindestens eine zweite Anmeldeinformation vorzugsweise ein Passwort und/oder eine PIN und/oder biometrische Daten, insbesondere einen Fingerabdruck und/oder einen Iris-Scan, umfasst.

4. Verfahren nach einem der vorhergehenden Ansprüche, wobei bei Schritt a) die Information, dass die Primärvorrichtung (PD) zum Authentifizieren des Benutzers verwendet werden soll, von der Sekundärvorrichtung (SD) zu dem Online-Dienst (OS) übertragen wird.

5. Verfahren nach einem der vorhergehenden Ansprüche, wobei die in Schritt b) von dem Online-Dienst (OS) übertragene Authentifizierungsaufforderung (ARE) eine Kennung der Sekundärvorrichtung (SD) enthält, wobei das Verfahren beendet wird, wenn die Sekundärvorrichtung (SD) mit dieser Kennung nicht für eine Benutzeranmeldung bei dem Online-Dienst (OS) registriert ist.

6. Verfahren nach einem der vorhergehenden Ansprüche, wobei die in Schritt c) von der Primärvorrichtung (PD) übertragene Authentifizierungsantwort (ARS) ferner eine Kennung der Primärvorrichtung enthält, wobei das Verfahren beendet wird, wenn sich die Kennung der Primärvorrichtung (PD) nicht auf die mit der Benutzerkennung (ID) verknüpfte Primärvorrichtung (PD) bezieht.

7. Verfahren nach einem der vorhergehenden Ansprüche, wobei der Online-Dienst (OS) über das Internet (IN) mit der Sekundärvorrichtung (SD) kommuniziert.

8. Verfahren nach einem der vorhergehenden Ansprüche, wobei der Online-Dienst (OS) über das Internet (IN) und/oder ein Mobilfunknetz mit der Primärvorrichtung (PD) kommuniziert, wobei es sich bei der Authentifizierungsaufforderung (ARE) und/oder der Authentifizierungsantwort (ARS) vorzugsweise um eine SMS-Nachricht handelt.

9. Verfahren nach einem der vorhergehenden Ansprüche, wobei es sich bei der Primärvorrichtung (PD) um eine Mobilvorrichtung, insbesondere ein Mobiltelefon und vorzugsweise ein Smartphone, handelt.

10. System zum Authentifizieren eines Benutzers (U) beim Anmelden für einen Online-Dienst (OS) mit einer Server-Anordnung, die den Online-Dienst (OS) bereitstellt, sowie einer Primärvorrichtung (PD) und einer Sekundärvorrichtung (SD), wobei der Online-Dienst (OS) und die Primärvorrichtung (PD) so ausgelegt sind, dass sie miteinander kommunizieren, und der Online-Dienst (OS) und die Sekundärvorrichtung (SD) so ausgelegt sind, dass sie miteinander kommunizieren, wobei das System so ausgelegt ist, dass es ein Verfahren mit den folgenden Schritten durchführt:
a) eine Benutzerkennung (ID), die vom Benutzer (U) an der Sekundärvorrichtung (SD) angegeben wird und keine Anmeldeinformationen enthält, wird von dem Online-Dienst (OS) empfangen,
b) eine Authentifizierungsaufforderung (ARE) wird von dem Online-Dienst (OS) zu der Primärvorrichtung (PD) übertragen, wobei die Primärvorrichtung (PD) mit der Benutzerkennung (ID) verknüpft ist,
c) eine Authentifizierungsantwort (ARS) mit mindestens einer Anmeldeinformation (CR) wird von der Primärvorrichtung (PD) zu dem Online-Dienst (OS) übertragen, wobei die mindestens eine Anmeldeinformation (CR) aus einem Speicher in der Primärvorrichtung (PD) stammt und nur nach erfolgreicher lokaler Authentifizierung des Benutzers (U) an der Primärvorrichtung (PD) über die Authentifizierungsantwort (ARS) übertragen wird oder wobei die mindestens eine Anmeldeinformation (CR) vom Benutzer (U) an der Primärvorrichtung (PD) angegeben wird,
d) bei einer erfolgreichen Verifizierung der mindestens einen Anmeldeinformation (CR) durch den Online-Dienst (OS) wird der Benutzer (U) für den Online-Dienst (OS) angemeldet und eine Bestätigung (CON) der Anmeldung zu der Sekundärvorrichtung (SD) gesendet,
**dadurch gekennzeichnet, dass**
ein Verifizierungscode zu der Primärvorrichtung (PD) übertragen und dort gespeichert wird, wobei der Verifizierungscode auch in der Sekundärvorrichtung (SD) gespeichert wird, wobei
- der in der Primärvorrichtung (PD) gespeicherte Verifizierungscode an einer Benutzerschnittstelle der Primärvorrichtung (PD) ausgegeben wird und eine Benutzerschnittstelle der Sekundärvorrichtung (SD) einen Benutzer in die Lage versetzt, den an der Benutzerschnittstelle der Primärvorrichtung (PD) ausgegebenen Verifizierungscode einzugeben, damit von der Sekundärvorrichtung (SD) überprüft werden kann, ob der an der Benutzerschnittstelle der Sekundärvorrichtung (SD) eingegebene Verifizierungscode mit dem in der Sekundärvorrichtung (SD) gespeicherten Verifizierungscode übereinstimmt,
oder
- der in der Sekundärvorrichtung (SD) gespeicherte Verifizierungscode an einer Benutzerschnittstelle der Sekundärvorrichtung (PD) ausgegeben wird und eine Benutzerschnittstelle der Primärvorrichtung (PD) einen Benutzer in die Lage versetzt, den an der Benutzerschnittstelle der Sekundärvorrichtung (SD) ausgegebenen Verifizierungscode einzugeben, damit von der Primärvorrichtung (PD) überprüft werden kann, ob der an der Benutzerschnittstelle der Primärvorrichtung (PD) eingegebene Verifizierungscode mit dem in der Primärvorrichtung (PD) gespeicherten Verifizierungscode übereinstimmt.

11. System nach Anspruch 10, wobei das System so ausgelegt ist, dass es ein Verfahren nach einem der Ansprüche 2 bis 9 durchführt.

## Revendications

1. Procédé pour authentifier un utilisateur (U) lors de sa connexion à un service en ligne (OS), dans lequel le service en ligne (OS) est fourni par un agencement de serveur (s) et le procédé est basé sur une communication entre le service en ligne (OS) et un dispositif primaire (PD) ainsi qu'entre le service en ligne (OS) et un dispositif secondaire (SD), le procédé comprenant les étapes qui suivent :
a) une identification d'utilisateur (ID) qui est spécifiée par l'utilisateur (U) au niveau du dispositif secondaire (SD) et qui n'inclut pas un quelconque authentifiant est reçue par le service en ligne (OS) ;
b) une requête d'authentification (ARE) est transmise par le service en ligne (OS) au dispositif primaire (PD), dans lequel le dispositif primaire (PD) est associé à l'identification d'utilisateur (ID) ;
c) une réponse d'authentification (ARS) qui comprend au moins un authentifiant (CR) est transmise par le dispositif primaire (PD) au service en ligne (OS), dans lequel l'au moins un authentifiant (CR) prend son origine à partir d'un stockage dans le dispositif primaire (PD) et est seulement transmis par l'intermédiaire de la réponse d'authentification (ARS) suite à une authentification locale couronnée de succès de l'utilisateur (U) au niveau du dispositif primaire (PD) ou dans lequel l'au moins un authentifiant (CR) est spécifié par l'utilisateur (U) au niveau du dispositif primaire (PD) ;
d) dans le cas d'une vérification couronnée de succès de l'au moins un authentifiant (CR) par le service en ligne (OS), l'utilisateur (U) est connecté au service en ligne (OS) et une confirmation (CON) de la connexion est envoyée au dispositif secondaire (SD) ;
**caractérisé en ce que** :
un code de vérification est transmis au dispositif primaire (PD) et est stocké en son sein, dans lequel le code de vérification est également stocké dans le dispositif secondaire (SD) ; dans lequel :
- le code de vérification qui est stocké dans le dispositif primaire (PD) est émis en sortie au niveau d'une interface utilisateur du dispositif primaire (PD), et une interface utilisateur du dispositif secondaire (SD) permet qu'un utilisateur entre le code de vérification qui est émis en sortie au niveau de l'interface utilisateur du dispositif primaire (PD) pour un contrôle par le dispositif secondaire (SD) de si oui ou non le code de vérification qui est entré au niveau de l'interface utilisateur du dispositif secondaire (SD) coïncide avec le code de vérification qui est stocké dans le dispositif secondaire (SD) ;
ou :
- le code de vérification qui est stocké dans le dispositif secondaire (SD) est émis en sortie au niveau d'une interface utilisateur du dispositif secondaire (PD), et une interface utilisateur du dispositif primaire (PD) permet qu'un utilisateur entre le code de vérification qui est émis en sortie au niveau de l'interface utilisateur du dispositif secondaire (SD) pour un contrôle par le dispositif primaire (PD) de si oui ou non le code de vérification qui est entré au niveau de l'interface utilisateur du dispositif primaire (PD) coïncide avec le code de vérification qui est stocké dans le dispositif primaire (PD).

2. Procédé selon la revendication 1, dans lequel l'au moins un authentifiant (CR) comprend un mot de passe et/ou un PIN et/ou des données biométriques, plus particulièrement une empreinte digitale et/ou une image de l'iris obtenue par balayage.

3. Procédé selon la revendication 1 ou 2, dans lequel l'authentification locale vérifie au moins un second authentifiant qui est spécifié par l'utilisateur (U) au niveau du dispositif primaire (PD), dans lequel l'au moins un second authentifiant comprend de préférence un mot de passe et/ou un PIN et/ou des données biométriques, plus particulièrement une empreinte digitale et/ou une image de l'iris obtenue par balayage.

4. Procédé selon l'une des revendications précédentes, dans lequel, au niveau de l'étape a), l'information consistant en ce que le dispositif primaire (PD) doit être utilisé pour authentifier l'utilisateur est transmise par le dispositif secondaire (SD) au service en ligne (OS).

5. Procédé selon l'une des revendications précédentes, dans lequel la requête d'authentification (ARE) qui est transmise au niveau de l'étape b) par le service en ligne (OS) inclut une identification du dispositif secondaire (SD) au niveau duquel le procédé est terminé si le dispositif secondaire (SD) qui présente cette identification n'est pas enregistré pour une connexion d'utilisateur au niveau du service en ligne (OS).

6. Procédé selon l'une des revendications précédentes, dans lequel la réponse d'authentification (ARS) qui est transmise au niveau de l'étape c) par le dispositif primaire (PD) inclut en outre une identification du dispositif primaire au niveau duquel le procédé est terminé si l'identification du dispositif primaire (PD) ne se réfère pas au dispositif primaire (PD) qui est associé à l'identification d'utilisateur (ID) .

7. Procédé selon l'une des revendications précédentes, dans lequel le service en ligne (OS) communique avec le dispositif secondaire (SD) via l'Internet (IN).

8. Procédé selon l'une des revendications précédentes, dans lequel le service en ligne (OS) communique avec le dispositif primaire (PD) via l'Internet (IN) et/ou un réseau de communication mobile, dans lequel la requête d'authentification (ARE) et/ou la réponse d'authentification (ARS) sont/est de préférence un message SMS.

9. Procédé selon l'une des revendications précédentes, dans lequel le dispositif primaire (PD) est un dispositif mobile, plus particulièrement un téléphone mobile et de préférence, un Smartphone.

10. Système pour authentifier un utilisateur (U) lors de sa connexion à un service en ligne (OS), comprenant un agencement de serveur(s) qui fournit le service en ligne (OS) de même qu'un dispositif primaire (PD) et qu'un dispositif secondaire (SD), dans lequel le service en ligne (OS) et le dispositif primaire (PD) sont adaptés pour communiquer l'un avec l'autre et dans lequel le service en ligne (OS) et le dispositif secondaire (SD) sont adaptés pour communiquer l'un avec l'autre, dans lequel le système est adapté pour réaliser un procédé qui comprend les étapes qui suivent :
a) une identification d'utilisateur (ID) qui est spécifiée par l'utilisateur (U) au niveau du dispositif secondaire (SD) et qui n'inclut pas un quelconque authentifiant est reçue par le service en ligne (OS) ;
b) une requête d'authentification (ARE) est transmise par le service en ligne (OS) au dispositif primaire (PD), dans lequel le dispositif primaire (PD) est associé à l'identification d'utilisateur (ID) ;
c) une réponse d'authentification (ARS) qui comprend au moins un authentifiant (CR) est transmise par le dispositif primaire (PD) au service en ligne (OS), dans lequel l'au moins un authentifiant (CR) prend son origine à partir d'un stockage dans le dispositif primaire (PD) et est seulement transmis par l'intermédiaire de la réponse d'authentification (ARS) suite à une authentification locale couronnée de succès de l'utilisateur (U) au niveau du dispositif primaire (PD) ou dans lequel l'au moins un authentifiant (CR) est spécifié par l'utilisateur (U) au niveau du dispositif primaire (PD) ;
d) dans le cas d'une vérification couronnée de succès de l'au moins un authentifiant (CR) par le service en ligne (OS), l'utilisateur (U) est connecté au service en ligne (OS) et une confirmation (CON) de la connexion est envoyée au dispositif secondaire (SD) ;
**caractérisé en ce que** :
un code de vérification est transmis au dispositif primaire (PD) et est stocké en son sein, dans lequel le code de vérification est également stocké dans le dispositif secondaire (SD) ; dans lequel :
- le code de vérification qui est stocké dans le dispositif primaire (PD) est émis en sortie au niveau d'une interface utilisateur du dispositif primaire (PD), et une interface utilisateur du dispositif secondaire (SD) permet qu'un utilisateur entre le code de vérification qui est émis en sortie au niveau de l'interface utilisateur du dispositif primaire (PD) pour un contrôle par le dispositif secondaire (SD) de si oui ou non le code de vérification qui est entré au niveau de l'interface utilisateur du dispositif secondaire (SD) coïncide avec le code de vérification qui est stocké dans le dispositif secondaire (SD) ;
ou :
- le code de vérification qui est stocké dans le dispositif secondaire (SD) est émis en sortie au niveau d'une interface utilisateur du dispositif secondaire (PD), et une interface utilisateur du dispositif primaire (PD) permet qu'un utilisateur entre le code de vérification qui est émis en sortie au niveau de l'interface utilisateur du dispositif secondaire (SD) pour un contrôle par le dispositif primaire (PD) de si oui ou non le code de vérification qui est entré au niveau de l'interface utilisateur du dispositif primaire (PD) coïncide avec le code de vérification qui est stocké dans le dispositif primaire (PD).

11. Système selon la revendication 10, dans lequel le système est adapté pour réaliser un procédé selon l'une quelconque des revendications 2 à 9.
